# NEW EUROPEAN PATENT SPECIFICATION

(11) **EP 2 448 405 B2**
(45) Date of publication and mention of the opposition decision: **18.10.2017**
(45) Mention of the grant of the patent: 12.11.2014
(21) Application number: 10732896.5
(22) Date of filing: 30.06.2010
(51) Int. Cl.: A01N 25/30, A01N 57/20, A01P 13/00, A01N 25/22

(54) **AQUEOUS HERBICIDE CONCENTRATE**
WÄSSRIGES HERBIZIDKONZENTRAT
CONCENTRÉ HERBICIDE AQUEUX

(30) Priority: 01.07.2009 IT VA20090040
(43) Date of publication of application: 09.05.2012
(73) Proprietor: Lamberti SpA, 21041 Albizzate (VA) (IT)
(72) Inventor: BOHUS, Peter, 8000 Székesfehérvár (HU); DI MODUGNO, Rocco, 20034 Giussano (MB) (IT); PAGANINI, Gianfranco, 20020 Magnago (MI) (IT); PICCO, Cristina, 20020 Nosate (MI) (IT); LI BASSI, Giuseppe, 21026 Gavirate (VA) (IT)
(74) Representative: Gislon, Gabriele
(86) International application number: PCT/EP2010/059304
(87) International publication number: WO 2011/000880

(56) References cited:
- EP-A1- 0 510 565
- EP-A1- 0 569 264
- EP-A2- 0 454 321
- WO-A1-00/08927
- WO-A1-03/059068
- WO-A1-2004/044378
- WO-A1-2004/111170
- AU-A- 3 826 593
- US-A1- 2005 032 649
- US-A1- 2005 032 649
- "Development of Alkylpolyglucoside Esters for Tank-Additive Adjuvants Application." Peter Bohus et al., Proceedings of the 7th International Symposium on Adjuvants for Agrochemicals (ISAA2004), p. 301-306; 8-12 November 2004, Cape Town, South Africa

## Description

### FIELD OF THE INVENTION

The present invention relates to stable aqueous herbicide concentrate compositions containing potassium, ammonium or isopropylamine salts of glyphosate and anionic esters of alkyl polyglycosides containing a salified sulfonic acid group.

### BACKGROUND OF THE ART

Agrochemical active ingredients - according to the characteristics of the actives and of their intended applications - can be formulated as dusts, wettable powders, dispersible granules, suspension concentrates, emulsions and concentrated solutions, and their application as formulated products is generally carried out with aqueous spray in the form of solution, suspension or emulsion.

Surfactants are commonly used in order to disperse and suspend the solid substances, or to emulsify the oily liquids in water, forming stable suspensions or emulsions. The surfactants help the formation of aqueous dispersions of compounds insoluble in water. Moreover the surfactants reduce the interface tension between aqueous spray and the material (soil, seeds, foliage) to be treated, thus favoring the spreading of droplets on the treated surface and the penetration of the active ingredient into the materials.

Among surfactants, which can be used for the afore mentioned purposes, aliphatic nonionic alkylpolyglycosides have been known for a long time. These materials offer several advantages due to their low toxicity and good biodegradability, especially if compared with the ethoxylated fatty amines, which are widely used as adjuvant for glyphosate but create concern for their aquatic toxicity. Due to these features, the organic polyglycosides provide, in agrochemical formulations and applications, a wider spectrum of functions, since other equivalent traditional adjuvants are normally used only as wetting agents and/or emulsifiers.

For instance, US 4,888,325 describes pesticide compositions that contain alkylglycosides, alone or in combination with other surfactants.

However, such compositions show weak wetting performance and cannot sufficiently reduce the interfacial tension between the aqueous spray and the material on which said spray are applied. US 5,385,750 describes the use of aliphatic alkylpolyglycosides as co-adjuvant in pesticide formulations in combination with a fatty alcohol.

According to US 5,385,750 the addition of a fatty alcohol to the alkylpolyglycosides increases its wetting performance, favoring the penetration of the pesticide active ingredient into biological materials, even when the treated surface layers are waxy or oily as in the case of foliage.

On the other hand, the presence of a fatty alcohol creates considerable drawbacks: it gives bad odors and causes a noticeable lowering of the emulsifying ability of the alkylpolyglycosides.

It is known from EP 1 179 979 how to obtain agrochemical compositions based on anionic alkylpolyglycosides that have better wetting properties and maintain suitable emulsifying characteristic, without the above described disadvantages of the nonionic alkylpolyglycosides.

US 7,316,990 (corresponding to US 2005/032649) describes herbicidal formulations containing high concentrations of glyphosate monomethylamine or dimethylamine salt and one or more surfactants selected from a long list of nonionic, ionic and cationic surfactants. Both nonionic alkylpolyglycosides and anionic ester derivatives of alkylpolyglycosides, in particular the citrate and tartrate esters, are used in the examples for the preparation of concentrated formulations of these specific glyphosate salts, which exhibit high stability and significantly lower viscosity at high concentrations.

Anionic esters of alkylpolyglucosides bearing a (not better detailed) residue from sulfosuccinic acid are also reported among the utilizable surfactants, but they are not exemplified nor preferred.

We have now discovered that concentrated aqueous formulations of potassium, ammonium and isopropylamine salts of N-(phosphonomethyl) glycine (glyphosate) comprising specific non-polyalkoxylated anionic esters of alkyl polyglycosides containing a salified sulfonic acid group are stable and can incorporate a higher amount of the anionic ester of alkylpolyglycosides; moreover they can be used to prepare in locus diluted sprayable formulations, without showing the crystallization problems that rise with other surfactants.

This is especially surprising in view of the fact that concentrated formulations containing the potassium, ammonium and isopropylamine salts of N-(phosphonomethyl) glycine (glyphosate) and an anionic ester of alkylpolyglycosides derived from citric and tartaric acid show poor stability.

### SUMMARY OF THE INVENTION

It is therefore an object of the present invention an aqueous herbicide composition containing from 100 to 750 g/l (as acid equivalent) of potassium, ammonium or isopropylamine salts of glyphosate and from 1 to 50%, preferably from 2 to 20%, by weight of anionic esters of linear or branched C₈-C₁₄ alkylpolyglycosides having the formula (I):

MO₃S - CH (CH₂-COOR₁) - COOR₂ (I)

wherein:
M is Na or K,
R₁ is the group:

   R - (CH(OH) - CH₂)ₘ- O - (Z)ₚ -

   which is connected to the acyl group through the residue Z, and wherein
   Z is the residue of glucose,
   R is a linear or branched alkyl group containing from 8 to 14 carbon atoms,
   m is 0
   p is between 1 and 5;
   R₂ is M.

### DETAILED DESCRIPTION OF THE INVENTION

The aqueous herbicide concentrate of the present invention comprises at least 10% by weight, preferably from 20 to 60% by weight, of water.

In formula (I) M is Na or K, R is a linear or branched alkyl group containing from 8 to 14 carbon atoms, Z is the residue of glucose, and p is between 1 and 5.

The anionic esters of linear or branched C₆-C₂₀ alkylpolyglycosides are known from EP 510565; they may be prepared by a process that comprises the sulfonation of the correspondent maleic monoesters of the formula:

R₂OC(O)-CH=CH-COOR₁

as described in more detail in the same patent.

In the most preferred embodiment, the anionic esters of alkylpolyglycosides are synthesized from alkylpolyglucosides having an average degree of polymerization between 1.0 and 2.5, i.e., preferably, in formula (I) p is between 1.0 and 2.5. This anionic esters are environmentally friendly and derived from renewable resources.

In the preferred embodiments the aqueous herbicide concentrate is a homogeneous solution and comprises from 300 to 700 g/l, more preferably from 400 to 655 g/l (as acid equivalent), of potassium, ammonium or isopropylamine salts of glyphosate.

The aqueous herbicide composition of the invention may further contain:
- other surfactants, such as nonionic alkylpolyglycosides, ethoxylated fatty alcohols, anionic esters of fatty alcohols, C₆-C₁₈ alkyldimethyl betaine.
- other herbicides, such as salts of glufosinate, bentazon, 2,4-D, dicamba, MCPA, MCPP, MCPB, amitrol, metconazol, clopyralid, dichlorprop, imazalil, picloram, and mixtures thereof;
- water soluble organic solvents, such as glycerol, ethylene glycol, propylenglycole, dipropylene glycol methyl ether (Dowanol DPM), dipropylene glycol, butyldiglycol, dimethylsulfoxide (DMSO), N-methyl-2-pyrrolidone, dibutoxymethane (butylal), methanol, ethanol, isopropanol, ethyl lactate (purasolv), propylene carbonate and mixture thereof;
- other usual additives of agrochemical compositions, such as antifoam agents, antifreeze agents, dyes, stabilizers, buffers, thickeners, flow enhancers, wetting agents, lubricants, fillers, drift control agents, deposition enhancers, evaporation retardants and the like.

The aqueous herbicide compositions according to the invention are useful for the treatment of plants and of any other biologic material which requires the application of herbicides. Preferably, said concentrated herbicide composition is used in diluted form, as aqueous spray formulations which include from 0.001% to 3% of active ingredient and, optionally, other concentrated preparations of active ingredients, micronutrients, other surfactants and/or other additives commonly used in the agrochemical compositions.

The Applicant has found that, in aqueous spray herbicide formulations, the use of anionic esters of alkylpolyglycoside containing a salified sulfonic acid group according to formula (I) can help the formation of a homogeneous dispersion of the herbicide in water, thus accelerating the penetration of active ingredient in the treated biological materials.

Optionally, the aqueous spray formulations can also include drift control agents, humectants, corrosion inhibitors, microbial inhibitors, pH adjusters, anti-foam agents or mixture thereof.

The following Examples serve to illustrate the stability of concentrated aqueous herbicide compositions according to the invention. A comparison is made with analogous compositions prepared from known anionic alkylpolyglycosides and from other surfactants that are known to efficiently perform as stabilizer of concentrated glyphosate compositions.

### EXAMPLES.

- Preparation of concentrated aqueous herbicide compositions of glyphosate isopropylamine salt (glyphosate IPA) with different surfactants.

The compositions of Example 1-12 were prepared by blending at room temperature an aqueous concentrate of glyphosate IPA 62% wt with the appropriate amount of surfactant and water as reported in Table 1 and 2.
Eucarol AGE/EC is a coco alkylpolyglucoside citric ester (Lamberti), 30% in water
Eucarol AGE/SS is a coco alkylpolyglucoside sulfosuccinic ester (Lamberti), 45 % in water
PIC 255 is a isodecyl alkylpolyglucoside sulfosuccinic ester, 50% in water
PIC 244 is a linear C8 - C10 alkylpolyglucoside sulfosuccinic ester, 50% in water
PIC 265 is a linear C10 and 2-ethylhexyl alkylpolyglucoside citric ester, 40% in water
PIC 263 is a linear C10 and 2-ethylhexyl alkylpolyglucoside , sulfosuccinic ester, 50% in water
PIC 245 is a linear C8 - C10 alkylpolyglucoside citric ester, 40% in water
Emulson CB 30 is an alkyldimethyl betaine, 30% in water (Lamberti) Emulson AG/GPE3/CA is a ethoxylated tallow amine (15 moles) 80% in isobutyl alcohol (Lamberti)
Emulson AG/GPE3/SSM is a ethoxylated tallow amine (15 moles) 70% in ethylene glycol and polyethylene glycol 200 (Lamberti)

**Table 1**

| **Component %** | **Ex. 1*** | **Ex.2** | **Ex.3** | **Ex.4** | **Ex.5*** | **Ex.6** |
|---|---|---|---|---|---|---|
| Water | 22,20 | 22,20 | 22,20 | 22,20 | 22,20 | 22,20 |
| Eucarol AGE/EC | 10,30 | | | | | |
| Eucarol AGE/SS | | 10,30 | | | | |
| PIC 255 | | | 10,30 | | | |
| PIC 244 | | | | 10,30 | | |
| PIC 265 | | | | | 10,30 | |
| PIC 263 | | | | | | 10,30 |
| Glyphosate IPA 62% | 67,50 | 67,50 | 67,50 | 67,50 | 67,50 | 67,50 |
| * Comparative | | | | | | |

**Table 2**

| **Component %** | **Ex. 7*** | **Ex. 8*** | **Ex. 9*** | **Ex. 10*** | **Ex.11** | **Ex.12*** |
|---|---|---|---|---|---|---|
| Water | 22,20 | 22,20 | 22,20 | 22,20 | 22,20 | 22,20 |
| Eucarol AGE/SS | | | | | 2,60 | |
| PIC 245 | 10,30 | | | | | |
| Emulson CB 30 | | 10,30 | | | 7,70 | 5,15 |
| Emulson AG/GPE3/CA | | | 10,30 | | | 5,15 |
| Emulson AG/GPE3/SSM | | | | 10,30 | | |
| Glyphosate I PA 62% | 67,50 | 67,50 | 67,50 | 67,50 | 67,50 | 67,50 |
| * Comparative | | | | | | |

Tables 3 and 4 report the characteristics of the concentrated herbicide compositions of Examples 1-12 and the aqueous spray formulations prepared thereof by dilution with water.

All the concentrated aqueous herbicide compositions of the invention are clear and homogeneous liquids. These compositions are stable for at least one week at 0 °C and at least 2 weeks at 54 °C with no phase separation or crystallization. Also the aqueous spray formulations prepared from the compositions of the invention are stable and can be stored for at least one day without any problem.

**Table 3**

| **Characteristic** | **Example 1*** | **Example 2** | **Example 3** | **Example 4** | **Example 5*** | **Example 6** |
|---|---|---|---|---|---|---|
| A.I. content (acid equivalent) | 360 g/l | 360 g/l | 360 g/l | 360 g/l | 360 g/l | 360 g/l |
| Density | 1,17 g/ml | 1,17 g/ml | 1,17 g/ml | 1,17 g/ml | 1,17 g/ml | 1,17 g/ml |
| Appearance | Crystals | Clear liquid | Clear liquid | Clear liquid | Clear liquid | Clear liquid |
| Stability (7 days at 0°C) | | No crystals | No crystals | No crystals | No crystals | No crystals |
| Stability (15 days at 54°C) | | No crystals | No crystals | No crystals | No crystals | No crystals |
| Appearance (sol. 5% t = 5h) | | Clear liquid | Clear liquid | Clear liquid | Cloudy liquid | Clear liquid |
| Appearance (sol. 5% t = 24h) | | Clear liquid | Clear liquid | Clear liquid | Crystals | Clear liquid |
| * Comparative | | | | | | |

**Table 4**

| **Characteristic** | **Example 7*** | **Example 8*** | **Example 9*** | **Example 10*** | **Example 11** | **Example 12*** |
|---|---|---|---|---|---|---|
| A.I. content (acid equivalent) | 360 g/l | 360 g/l | 360 g/l | 360 g/l | 360 g/l | 360 g/l |
| Density | 1,17 g/ml | 1,17 g/ml | 1,17 g/ml | 1,17 g/ml | 1,17 g/ml | 1,17 g/ml |
| Appearance | Clear liquid | Clear liquid | Clear liquid | Clear liquid | Clear liquid | Clear liquid |
| Stability (7 days at 0°C) | No crystals | No crystals | No crystals | No crystals | No crystals | No crystals |
| Stability (15 days at 54°C) | No crystals | No crystals | No crystals | No crystals | No crystals | No crystals |
| Appearance (sol. 5%, t = 5h) | Cloudy liquid | Clear liquid | Clear liquid | Clear liquid | Clear liquid | Clear liquid |
| Appearance (sol. 5% t = 24h) | Crystals | Clear liquid | Clear liquid | Clear liquid | Clear liquid | Clear liquid |
| * Comparative | | | | | | |

### Examples 13-19

Compositions of Example 13-19 were prepared by blending at room temperature a concentrate solution of glyphosate IPA 62% or a concentrate solution of glyphosate potassium salt 69% or 61 % (glyphosate K) with the appropriate amount of surfactant and water as reported in Tables 5 and 6.

**Table 5**

| **Component %** | **Ex. 2** | **Ex.13** | **Ex.14** | **Ex. 15** | **Ex. 16** |
|---|---|---|---|---|---|
| Water | 22.2 | 13.5 | 18.0 | 3,6 | 32 |
| Glyphosate-IPA 62% | 67.5 | 66.4 | | 86,4 | 24 |
| Glyphosate K61% | | | 71.1 | | |
| 2,4-D DMA (49%) | | | | | 27 |
| Eucarol AGE SS | 10.3 | 20.1 | 10.9 | 10,0 | 17 |

**Table 6**

| **Component %** | **Ex. 17** | **Ex.18** | **Ex. 19** |
|---|---|---|---|
| Water | | 18.4 | 10.3 |
| Glyphosate-IPA 62% | | 66.4 | |
| Glyphosate K 61% | 90 | | 78.8 |
| PIC 244 | 10 | | 10.9 |
| Eucarol AGE SS | | 15.2 | |

Table 7 and 8 report the characteristics of the concentrate herbicide compositions of Examples 2, 13-19. The viscosity of the compositions was measured with a Brookfield™ LVT viscometer.

**Table 7**

| **Characteristic** | **Example 2** | **Example 13** | **Example 14** | **Example 15** | **Example 16** |
|---|---|---|---|---|---|
| A.I. content (glyphosate acid equivalent) | 360 g/l | 360 g/l | 480 g/l | 480 g/l | 130 g/l |
| Density | 1,17 g/ml | 1,19 g/ml | 1,35 g/ml | 1,20 g/ml | 1,18 g/ml |
| Appearance | Clear liquid | Clear liquid | Clear liquid | Clear liquid | Clear liquid |
| Stability (25 °C; 720 days) | No crystals | No crystals | No crystals | No crystals | No crystals |
| Stability (0 °C; 7 days) | No crystals | No crystals | No crystals | No crystals | No crystals |
| Viscosity (spindle N° 1,5 rpm, 25°C) | 37,7 mPa*s | 39,2 mPa*s | 35,0 mPa*s | 48,0 mPa*s | 30,5 mPa*s |

All the concentrate aqueous herbicide compositions of Examples 13-19, according to the invention, are clear and homogeneous liquids. These compositions are stable for at least 720 days at 25 °C with no phase separation or crystallization. Moreover the viscosity of the compositions are very low so they can be poured and mixed with other substances or solvents quite easily.

**Table 8**

| **Characteristic** | **Example 17** | **Example 18** | **Example 19** |
|---|---|---|---|
| A.I. content (glyphosate acid equivalent) | 655 g/l | 360 g/l | 540 g/l |
| Density | 1.47 g/ml | 1,18 g/ml | 1,37 g/ml |
| Appearance | Clear liquid | Clear liquid | Clear liquid |
| Stability (25 °C; 720 days) | No crystals | No crystals | No crystals |
| Stability (0 °C; 7 days) | No crystals | No crystals | No crystals |
| Viscosity (spindle N° 1,5 rpm, 25°C) | 95,0 mPa*s | 39,2 mPa*s | 35,0 mPa*s |

## Claims

1. Aqueous herbicide composition containing from 100 to 750 g/l (as acid equivalent) of potassium, ammonium or isopropylamine salts of glyphosate and from 1 to 50%, preferably from 2 to 20%, by weight of anionic esters of linear or branched C₈-C₁₄ alkylpolyglycosides having formula (I):
MO₃S - CH (CH₂-COOR₁) - COOR₂ (I)
wherein:
M is Na or K;
R₁ is the group:
R - (CH(OH) - CH₂)ₘ- O - (Z)ₚ-
which is connected to the acyl group through the residue Z, and
wherein
Z is the residue of glucose,
R is a linear or branched alkyl group containing from 8 to 14 carbon atoms,
m is 0,
p is between 1 and 5;
R₂ is M.

2. The aqueous herbicide composition according to claim 1. comprising at least 10% by weight of water.

3. The aqueous herbicide composition according to claim 2. comprising from 20 to 60% by weight of water.

4. The aqueous herbicide composition according to claim 1. or 2, or 3. comprising from 2 to 20% by weight of the anionic esters of linear or branched C₈-C₁₄ alkylpolyglycosides and from 400 to 655 g/l (as acid equivalent) of the glyphosate salts.

## Patentansprüche

1. Wässrige Herbizid-Zusammensetzung, die zwischen 100 und 750 g/l (als Säureäquivalent) Kalium-, Ammonium- oder Isopropylaminsalze von Glyphosat und zwischen 1 und 50 Gew.-%, vorzugsweise zwischen 2 und 20 Gew.-% anionische Ester linearer oder verzweigter C₈-C₁₄-Alkylpolyglycoside enthält, die die folgende Formel (I) aufweist:
MO₃S - CH(CH₂-COOR₁) - COOR₂ (I)
wobei:
M Na oder K ist;
R₁ die Gruppe:
R - (CH(OH) - CH₂)ₘ- O - (Z)ₚ -
ist, die mit der Acylgruppe durch den Rest Z verbunden ist, und
wobei
Z der Rest von Glucose ist,
R ein lineares oder verzweigtes Alkyl ist, das zwischen 8 und 14 Kohlenstoffatomen enthält,
m 0 ist,
p zwischen 1 und 5 ist;
R₂ M ist.

2. Wässrige Herbizid-Zusammensetzung gemäß Anspruch 1, die mindestens 10 Gew.-% Wasser umfasst.

3. Wässrige Herbizid-Zusammensetzung gemäß Anspruch 2, die zwischen 20 und 60 Gew.-% Wasser umfasst.

4. Wässrige Herbizid-Zusammensetzung gemäß Anspruch 1 oder 2 oder 3, die zwischen 2 und 20 Gew.-% von den anionischen Estern linearer oder verzweigter C₆-C₁₄-Alkylpolyglycoside und zwischen 400 und 655 g/l (als Säureäquivalent) von den Glyphosatsalzen umfasst.

## Revendications

1. Composition herbicide aqueuse contenant entre 100 et 750 g/l (en équivalent acide) de potassium, de sels d'ammonium ou d'isopropylamine de glyphosate et de 1 à 50 %, de préférence de 2 à 20 %, du poids d'esters anioniques d'alkylpolyglycosides C₈-C₁₄ linéaires ou ramifiés ayant la formule (I) :
MO₃S - CH (CH₂ COOR₁) - COOR₂ (I)
dans laquelle:
M est Na ou K;
R₁ est le groupe :
R-(CH(OH)-CH₂)ₘ-0-(Z)ₚ-
qui est raccordé au groupe acyle par le résidu Z, et
dans laquelle
Z est le résidu de glucose,
R est un alkyle linéaire ou ramifié contenant entre 8 et 14 atomes de carbone,
m est 0,
p est un nombre de 1 à 5;
R₂ est M.

2. La composition herbicide aqueuse selon la revendication 1, comprenant au moins 10 % en poids d'eau.

3. La composition herbicide aqueuse conforme à la revendication 2, comprenant entre 20 et 60 % en poids d'eau.

4. La composition herbicide aqueuse conforme à la revendication 1, ou 2, ou 3, comprenant entre 2 et 20% du poids des esters anioniques d'alkylpolyglycosides C₈ -C₁₄ linéaires ou ramifiés et entre 400 et 655 g/l (en équivalent acide) des sels de glyphosate.
